(19)

Europäisches
Patentamt
European
Patent Office
Office européen
des brevets

(11)　EP 2 234 261 B1

(12)　　　　　　　　**EUROPEAN PATENT SPECIFICATION**

(45) Date of publication and mention
of the grant of the patent:
**30.03.2016 Bulletin 2016/13**

(21) Application number: **09700292.7**

(22) Date of filing: **06.01.2009**

(51) Int Cl.:
***H02M 7/12*** *(2006.01)*　　***H02M 7/162*** *(2006.01)*

(86) International application number:
**PCT/JP2009/050021**

(87) International publication number:
**WO 2009/087989 (16.07.2009 Gazette 2009/29)**

(54) **POWER CONVERSION DEVICE, POWER CONVERSION DEVICE MODULE, AIR CONDITIONER, AND FREEZING DEVICE**

STROMWANDLER, STROMWANDLERMODUL, KLIMAANLAGE UND GEFRIERVORRICHTUNG

DISPOSITIF DE CONVERSION DE PUISSANCE, MODULE DE DISPOSITIF DE CONVERSION DE PUISSANCE, CONDITIONNEUR D'AIR ET DISPOSITIF DE CONGÉLATION

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **11.01.2008 JP 2008003862**

(43) Date of publication of application:
**29.09.2010 Bulletin 2010/39**

(73) Proprietor: **Hitachi Appliances, Inc.**
**Minato-ku**
**Tokyo 105-0022 (JP)**

(72) Inventors:
• **LI, Dongsheng**
**Tokyo 100-8220 (JP)**
• **NOTOHARA, Yasuo**
**Tokyo 100-8220 (JP)**
• **IWAJI, Yoshitaka**
**Tokyo 100-8220 (JP)**
• **KURITA, Yoshiaki**
**Shizuoka-shi**
**Shizuoka 424-0926 (JP)**

(74) Representative: **Beetz & Partner mbB**
**Patentanwälte**
**Steinsdorfstraße 10**
**80538 München (DE)**

(56) References cited:
EP-A1- 2 003 758　　EP-A2- 2 023 476
DE-A1- 4 319 254　　JP-A- 7 059 352
JP-A- 2004 153 918　JP-A- 2005 151 755
JP-A- 2005 341 720　US-A1- 2006 044 848

• FU ZHONGWEN ET AL: "A new current detecting method based on d-q transformation for active power filter", POWER SYSTEM TECHNOLOGY, 2002. PROCEEDINGS. POWERCON 2002. INTERNATION AL CONFERENCE ON, PISCATAWAY, NJ, USA,IEEE, vol. 4, 13 October 2002 (2002-10-13), pages 2265-2268, XP010614749, ISBN: 978-0-7803-7459-1
• DONG-CHOON LEE ET AL: "AC voltage and current sensorless control of three-phase PWM rectifiers", POWER ELECTRONICS SPECIALISTS CONFERENCE, 2000. PESC 00. 2000 IEEE 31S T ANNUAL 18-23 JUNE 2000, PISCATAWAY, NJ, USA,IEEE, vol. 2, 18 June 2000 (2000-06-18), pages 588-593, XP010518727, ISBN: 978-0-7803-5692-4

**Description**

TECHNICAL FIELD

This invention relates to a power conversion device, an air conditioner and a freezing device. A power conversion device according to the preamble portion of claim 1 has been known from US 2006/0044848 A1.

BACKGROUND ART

A PWM converter device for converting alternative current (AC) power to direct current (DC) power is widely used. In this converter device, the DC voltage side and the AC voltage side are connected by a semiconductor switching element. In the case where this semiconductor switching element is controlled on/off and an instantaneous change (temporary drop or temporary rise) of the source voltage of a power supply occurs, the input AC current may undergo an abrupt change. Once the input AC current undergoes an abrupt change, an over current flows in the semiconductor switching element, and the output DC voltage may undergo an abrupt change. In the case where the output DC voltage undergoes a great change, the very operation of the conversion device would become unstable and the load would be affected. Especially, in the case where the DC voltage changes abruptly with the PWM converter device connected to an inverter for driving a motor, the motor would become unstable and often step out into a stationary state.

Generally, in the case where an overcurrent or an overvoltage is generated in the PWM converter device at the time of instantaneous change in the source voltage of the power supply, the operation of all the semiconductor switching elements is stopped to protect the converter device, and switched to the diode rectification operation using a diode connected in antiparallel to the semiconductor switching elements.

During the diode rectification operation, however, the output voltage is not controlled by feedback, and therefore, the output DC voltage unavoidably drops due to the temporary drop of the source voltage of the power supply. With the drop in the output DC voltage, not only the load is affected (the motor operation stopped, etc.) but also an excessive surge current may flow at the time of power restoration.

As a measure against the abrupt change in source voltage of the power supply, JP-3743950 B discloses a method in which the instantaneous value of the three-phase voltage is detected, and by calculating the reactive component (d-axis component amount) and the active component (q-axis component amount) of the source voltage of the power supply and using the active component thus calculated, the occurrence of an instantaneous stop is determined while at the same time compensating for the voltage command value. On the other hand, JP-2007-68332 A discloses a converter and an inverter (power conversion device) for controlling the motor and reducing the motor speed by detecting the source voltage of the power supply and the capacitor current at the time of the instantaneous power stop.

US 2006/0044848 A1 discloses a power conversion device comprising a plurality of reactors with each one end thereof connected to each phase of an AC power supply, a converter circuit connected to each other end of the plurality of reactors to convert AC power to DC power, a smoothing capacitor connected between DC terminals on an output side of the converter circuit, a current detection circuit for detecting a DC bus current as a sum of a load current and a current flowing in the smoothing capacitor or an input AC current of the converter circuit, a voltage detection circuit for detecting an output DC voltage of the converter circuit, and a control unit for controlling the converter circuit using a current value detected by the current detection circuit and a voltage detection value detected by the voltage detection circuit.

DISCLOSURE OF THE INVENTION

PROBLEM TO BE SOLVED BY THE INVENTION

In the technique described in JP-B-3743950, the detection of the three-phase instantaneous value requires a high-precision three-phase source voltage sensor and a multiplicity of A/D converters, and a low-cost microcomputer is difficult to use in the control unit. Specifically, according to the technique of JP-B-3743950, the use of a multiplicity of voltage sensors increases the cost, and with the increase in the number of parts, the device reliability is deteriorated. Also, the technique described in JP-A-2007-68332, the converter and the inverter are required to be operated in timing with each other to detect the instantaneous stop and control the deceleration of the motor, and therefore, the configuration including the converter alone is difficult to employ.

In view of this, the object of this invention is to provide a power conversion device, a power conversion device module, an air conditioner and a freezing device capable of detecting the occurrence of a change in the source voltage of the power supply without detecting the phase voltage.

This object is accomplished with a power conversion device with the features of claim 1.

Dependent claims are directed on features of preferred embodiments of the invention.

In this aspect, a change in a voltage of a power supply is determined based on the change in the detection value of the output DC voltage and the change in the current value. In other words, the value of the three-phase AC voltage is not required to be detected, and therefore, the number of parts can be reduced. Also, upon determination of the occurrence of a change, the sudden change in the input current and the DC voltage can be suppressed by switching the operation mode of the power conversion device from the normal operation (dq vector control) to the partial boost operation.

ADVANTAGES OF THE INVENTION

According to this invention, the occurrence of a change in the source voltage of the power supply can be detected without detecting the phase voltage. Also, the abrupt change in the output DC voltage can be suppressed by switching the power conversion device from the dq vector control to the partial boost operation.
Other objects, features and advantages of the invention will be made apparent by the description of embodiments of the invention taken below in conjunction with the accompanying drawings.

BEST MODE FOR CARRYING OUT THE INVENTION

(First embodiment)

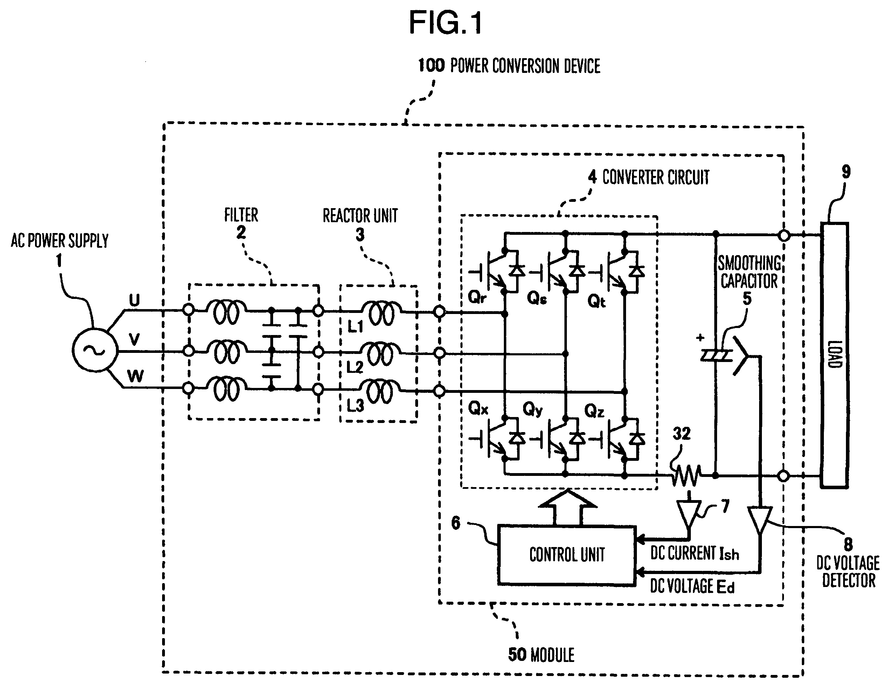

Fig. 1 is a diagram showing the configuration of the power conversion device according to a first embodiment of the invention.
A power conversion device 100, in which the three-phase AC power supplied from an external three-phase AC power supply 1 is converted to DC power and supplied to a load 9, includes a filter 2, a reactor unit 3, a converter circuit 4, a smoothing capacitor 5, a shunt resistor 32, a bus DC current detector 7, a DC voltage detector 8 and a control unit 6. The converter circuit 4, the smoothing capacitor 5, the shunt resistor 32, the bus DC current detector 7, the DC voltage detector 8 and the control unit 6 make up a module 50. Incidentally, the control unit 6 corresponds to a control unit and uses a semiconductor arithmetic element such as a microcomputer or a DSP (digital signal processor).
The AC power supply 1 is a three-phase AC power supply for outputting a U-phase voltage, a V-phase voltage and a W-phase voltage. The filter 2 includes coils inserted in each phase and capacitors connected between the phases, and can reduce a high-frequency ripple current. Also, though not shown, a capacitor may be connected between each phase and the earth to function as a common-mode filter. The reactor unit 3 is configured with reactors L1, L2, L3 inserted in U, V and W phases, respectively, to store magnetic energy.
The converter circuit 4 includes six switching elements (IGBT: Insulated Gate Bipolar Transistor) Qr, Qs, Qt, Qx, Qy, Qz and six diodes connected between the collector and the emitter of each switching element. The collector terminals of the switching elements Qr, Qs, Qt are connected to each other, and the emitter terminals of the switching elements Qx, Qy, Qz are connected to each other. The emitter terminal of the switching element Qr is connected to the collector terminal of the switching element Qx, the emitter terminal of the switching element Qs to the collector terminal of the switching element Qy, and the emitter terminal of the switching element Qt to the collector terminal of the switching element Qz. Each connection point is connected to U, V or W phase.
The smoothing capacitor 5 is connected in parallel to the load 9 and reduces the ripple component of the output voltage. The shunt resistor 32, which is for detecting the sum of the load current flowing in the load 9 and the current flowing in the smoothing capacitor 5, is connected between one end of the smoothing capacitor 5 and the emitter terminals of the switching elements Qx, Qy, Qz. The bus DC current detector 7 is for outputting the DC current Ish of the bus detected by the shunt resistor 32, and the DC voltage detector 8 is for outputting the DC voltage Ed across the smoothing capacitor 5. The control unit 6, based on the bus DC current Ish and the DC voltage Ed, generates a PWM signal to be supplied to the gates of the switching elements Qr, Qs, Qt, Qx, Qy and Qz.

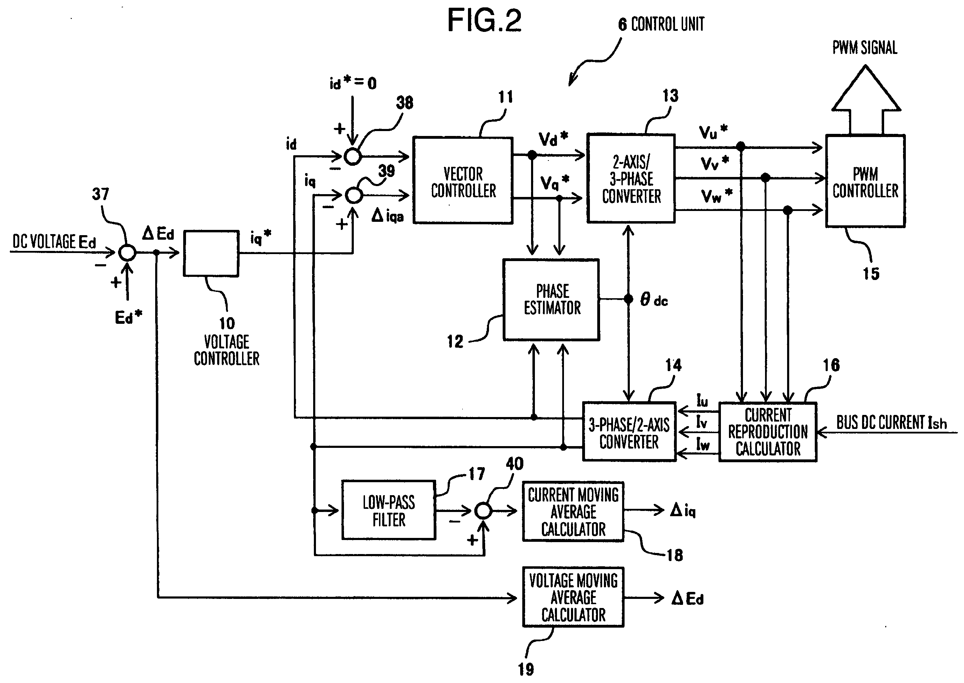

Fig. 2 is a diagram showing a function block configuration of the control unit 6, in which each function is realized by a CPU (computer) and a program.
The control unit 6, which generates a PWM signal by dq vector control, includes a voltage controller 10, a vector controller 11, a phase estimator 12, a two-axis/three-phase converter 13, a three-phase/two-axis converter 14, a PWM controller 15, a current reproduction calculator 16, a low-pass filter 17, a current moving average calculator 18, a voltage moving average calculator 19 and subtractors 37, 38, 39, 40.
The current reproduction calculator 16 reproduces the three-phase AC currents Iu, Iv, Iw using the bus DC current Ish and the three-phase voltage command values Vu*, Vv*, Vw*. The three-phase/two-axis converter 14 calculates the q-axis current iq and the d-axis current id according to the expression described below, based on the reproduced three-phase current and the estimated phase information $\theta_{dc}$ Incidentally, the q-axis current iq is an active component, and the d-axis current id orthogonal to the q-axis current iq is a reactive component.

[Expression 1]

$$\begin{pmatrix} I\alpha \\ I\beta \end{pmatrix} = \frac{2}{3} \begin{pmatrix} \cos(0) & \cos(2\pi/3) & \cos(4\pi/3) \\ \sin(0) & \sin(2\pi/3) & \sin(4\pi/3) \end{pmatrix} \begin{pmatrix} Iu \\ Iv \\ Iw \end{pmatrix}$$

$$\begin{pmatrix} Id \\ Iq \end{pmatrix} = \begin{pmatrix} \cos(\theta dc) & -\sin(\theta dc) \\ \sin(\theta dc) & \cos(\theta dc) \end{pmatrix} \begin{pmatrix} I\alpha \\ I\beta \end{pmatrix}$$

The subtractor 37 calculates a deviation ΔEd by subtracting the DC voltage Ed from the DC voltage command value Ed*. The voltage controller 10 calculates the q-axis current command value iq* from the deviation ΔEd. The subtractor 39 subtracts the q-axis current iq from the q-axis current command value iq* and outputs a deviation Δiqa. The subtractor 38 subtracts the d-axis current id from the d-axis current command value id*. In order to minimize the reactive current component of the input current, however, the d-axis current command value (id*) is set to zero.

The vector controller 11 calculates the d-axis command voltage Vd* and the q-axis command voltage Vq* on the dq axis using the output signals of the subtractors 38, 39. The two-axis/three-phase converter 13 calculates the three-phase command voltages Vu*, Vv*, Vw* according to the expression described below, using the d-axis command voltage Vd*, the q-axis command voltage Vq* and the phase information $\theta_{dc}$ from the phase estimator 12.

[Expression 2]

$$\begin{pmatrix} Va \\ Vb \end{pmatrix} = \begin{pmatrix} \sin(\theta dc) & \cos(\theta dc) \\ -\cos(\theta dc) & \sin(\theta dc) \end{pmatrix} \begin{pmatrix} Vd* \\ Vq* \end{pmatrix}$$

$$\begin{pmatrix} Vu* \\ Vv* \\ Vw* \end{pmatrix} = \begin{pmatrix} \cos(0) & \sin(0) \\ \cos(2\pi/3) & \sin(2\pi/3) \\ \cos(4\pi/3) & \sin(4\pi/3) \end{pmatrix} \begin{pmatrix} Va \\ Vb \end{pmatrix}$$

The PWM controller 15 outputs the PWM signal using the three-phase command voltages Vu*, Vv*, Vw*.

The low-pass filter 17, to which the q-axis current iq is input, outputs the q-axis current iq less the change rate thereof. The subtractor 40 outputs the q-axis current iq less the output signal of the low-pass filter 17. As a result, the subtractor 40 outputs a gradually decreasing change value Δiq of the q-axis current iq. The current moving average calculator 18 removes the ripple component by taking the moving average of the output value of the subtractor 40.

The voltage moving average calculator 19, by taking the moving average of the output signal ΔEd of the subtractor 37, removes the ripple component and calculates the change value ΔEd of the DC voltage. In order to shorten the delay in the determination of the instantaneous change of the source voltage of the power supply, the time length of the process of taking the moving average is set to 1 to 5 ms. Incidentally, in steady state, the active current component amount (q-axis current iq) and the DC voltage Ed undergo so small a change that the change value Δiq of the current and the change value ΔEd of the DC voltage are small.

In the case where the source voltage of the AC power supply 1 decreases temporarily, on the other hand, the active current component amount (q-axis current iq) decreases, and the DC voltage Ed also decreases below the DC voltage command value Ed*, with the result that the change value Δiq of the q-axis current takes a negative value, while the change value ΔEd of the DC voltage takes a positive value. On the contrary, in the case where the source voltage of the AC power supply 1 increases temporarily, the active current component amount iq increases, and the DC voltage Ed increases beyond the DC voltage command value Ed*, with the result that the change value Δiq of the q-axis current takes a positive value, while the change value ΔEd of the DC voltage takes a negative value. Specifically, by determining whether the change value Δiq of the q-axis current and the change value ΔEd of the DC voltage undergo a change in opposite directions or not, the temporary drop and the temporary rise of the source voltage of the AC power supply 1 can be determined.

At the time of an abrupt change in the DC load, both the active current component amount (q-axis current iq)

and the DC voltage Ed undergo a change, and therefore, the change value Δiq of the q-axis current and the change value ΔEd of the DC voltage are likely to increase. In the case where the load 9 (Fig. 1) abruptly decreases, for example, the active current component amount (q-axis current iq) decreases. However, since the DC voltage Ed increases beyond the DC voltage command value Ed*, the change value Δiq of the q-axis current takes a negative value and the change value ΔEd of the DC voltage takes a negative value. On the contrary, an abrupt increase in the load 9 (Fig. 1) increases the active current component amount (q-axis current iq). However, since the DC voltage Ed decreases below the DC voltage command value Ed*, the change value Δiq of the q-axis current takes a positive value and the change value ΔEd of the DC voltage takes a positive value.

Based on the magnitude and the plus/minus of the change value Δiq of the q-axis current and the change value ΔEd of the DC voltage calculated, therefore, the occurrence of an instantaneous change in the source voltage can be determined. In the case where the current change value Δiq decreases below a predetermined negative value and the change value ΔEd of the DC voltage decreases below a predetermined negative value, for example, the occurrence of temporary decrease in the source voltage of the power supply can be determined. On the contrary, in the case where the current change value Δiq increases beyond a predetermined positive value and the change value ΔEd of the DC voltage increases beyond a predetermined positive value, then the occurrence of temporary increase in the source voltage of the power supply can be determined. These predetermined values for comparison are determined in advance by simulation or experiments.

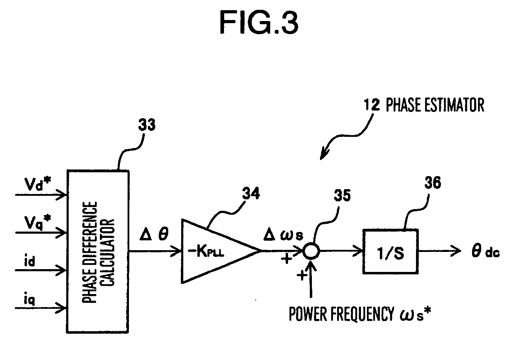

Fig. 3 is a diagram showing the function block configuration of the phase estimator 12.

The phase estimator 12, which is for estimating the phase difference $\theta_{dc}$ by the source voltage sensorless control method, includes a phase difference calculator 33, an amplifier 34, an adder 35 and an integrator 36.

The phase difference calculator 33 calculates the phase difference Δθ according to the equation described below, from the d-axis command voltage Vd*, the q-axis command voltage Vq*, the d-axis current id and the q-axis current iq.

$$\Delta\theta \;=\; \tan^{-1}\{(Vd^{*} + \omega L Id)/(Vq^{*} - \omega L Iq)\}$$

where L is the inductance of the reactors L1, L2, L3 and $\omega$ is the power frequency.

In the amplifier 34, the phase difference Δθ output from the phase difference calculator 33 is multiplied by the amplification factor $-K_{PLL}$ to output the frequency deviation Δωs, where the amplification factor $-K_{PLL}$ is the gain of the control system for PLL control to eliminate the deviation Δθ between the power phase and the control system phase.

The adder 35 calculates the frequency of the control system by adding the frequency deviation Δωs and the power frequency ωs*. The integrator 36 calculates the control system phase $\theta_{dc}$ by integrating the output signal of the adder 35.

Next, an explanation is given about a method of determining the occurrence of an instantaneous change in the source voltage of the power supply using the q-axis current iq and the DC voltage Ed.

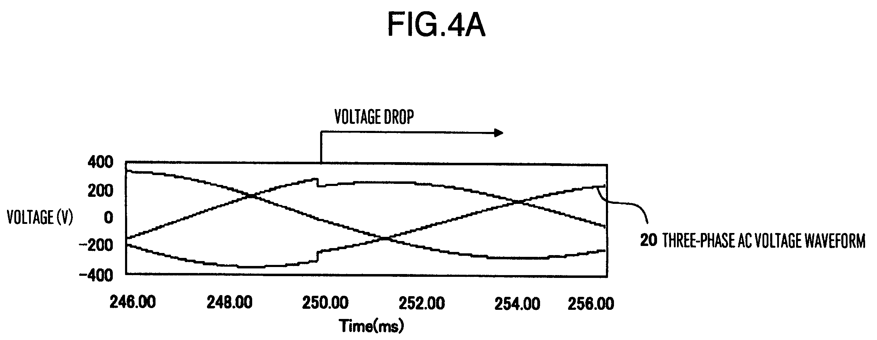

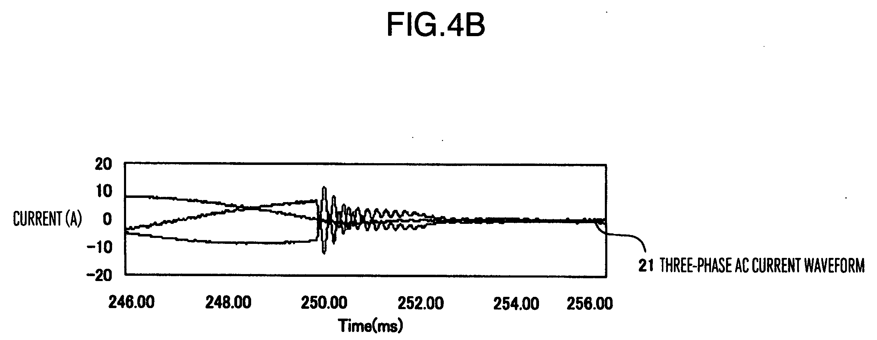

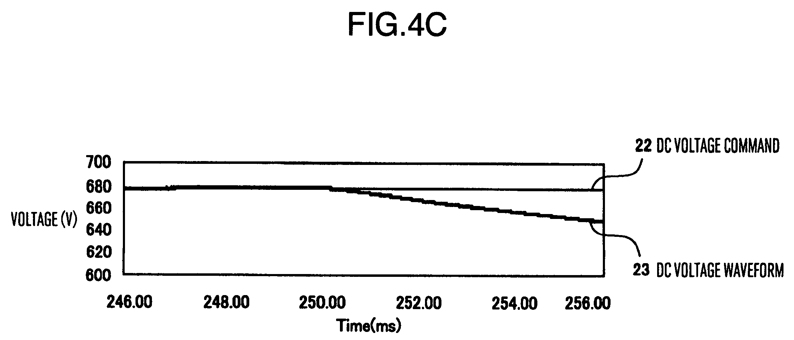

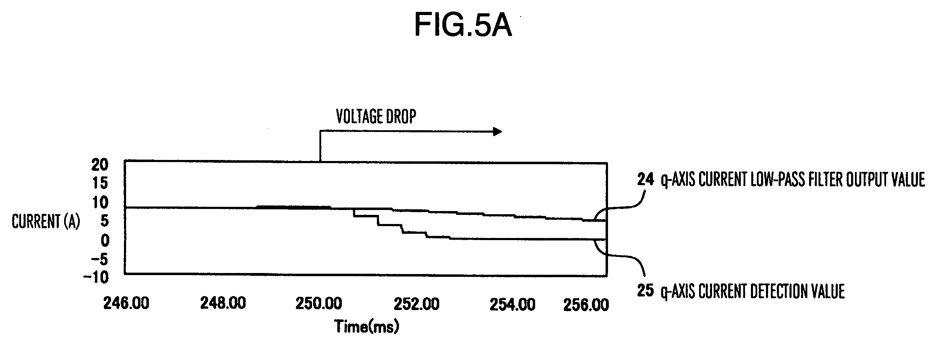

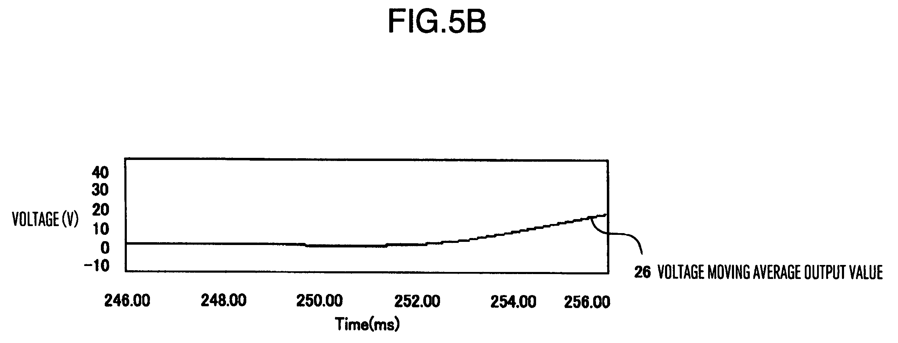

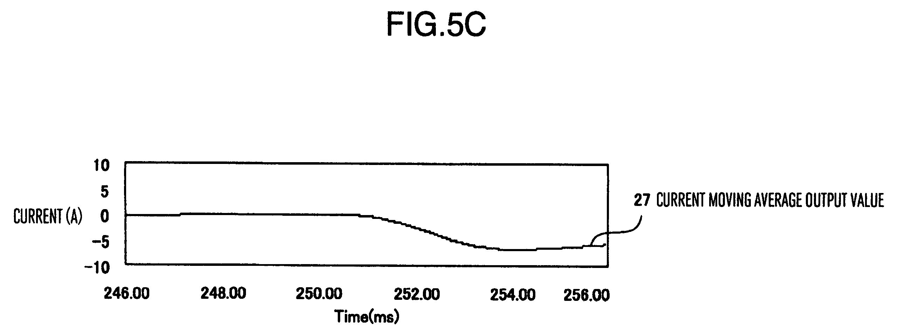

Figs. 4A to 4C and 5A to 5C show simulation waveforms of a three-phase AC voltage waveform 20, a three-phase AC current waveform 21, a DC voltage command 22, a DC voltage waveform 23, a value 24 of the active current component amount (q-axis current) output from the low-pass filter, a q-axis current detection value 25, a voltage moving average output value 26 and a current moving average output value 27. It is understood that due to the decrease in the three-phase AC voltage, the three-phase AC current waveform 21 is converged to zero transiently (Fig. 4B) and the distance of the DC voltage waveform 23 from the DC voltage command value 22 gradually increases (Fig. 4C). In the process, the q-axis current detection value 25 decreases (Fig. 5A), the voltage moving average output value 26 gradually increases (Fig. 5B) and the current moving average value 27 gradually decreases (Fig. 5C).

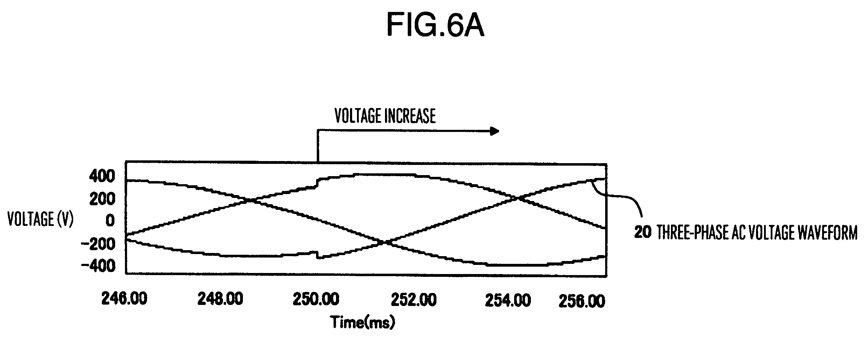

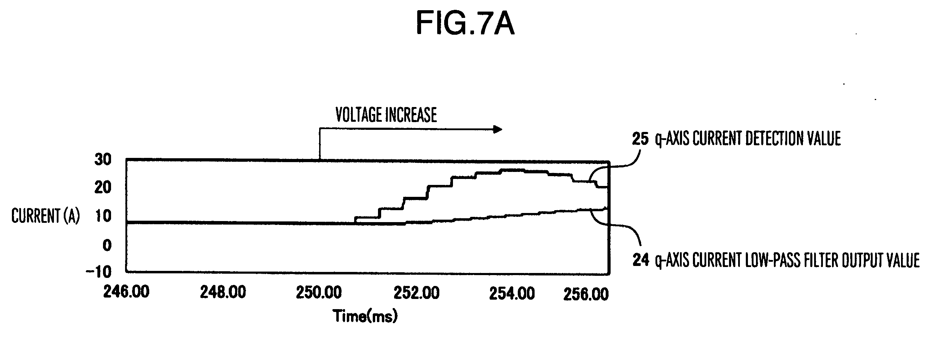

Also, the voltage-current simulation waveforms for power restoration are shown in Figs. 6A to 6C, Figs. 7A to 7C.

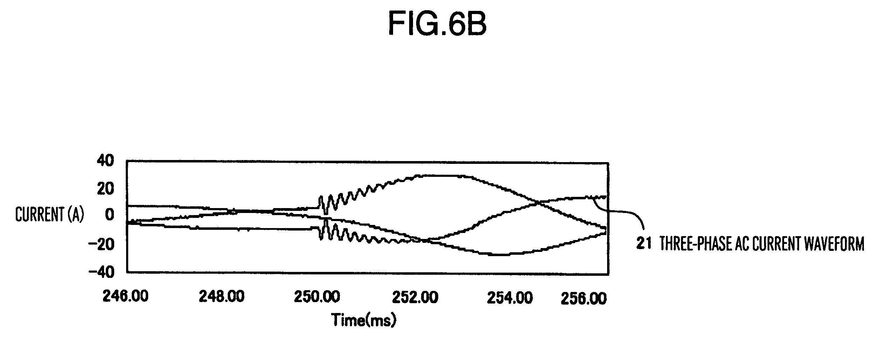

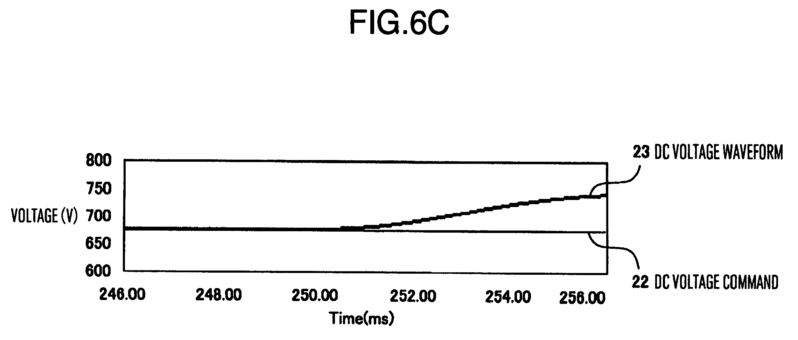

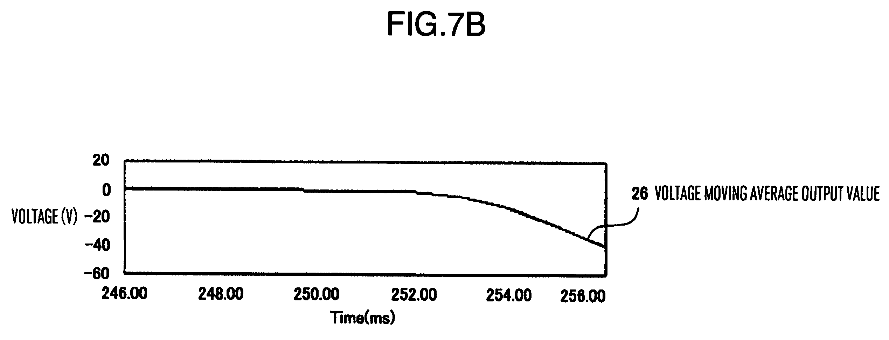

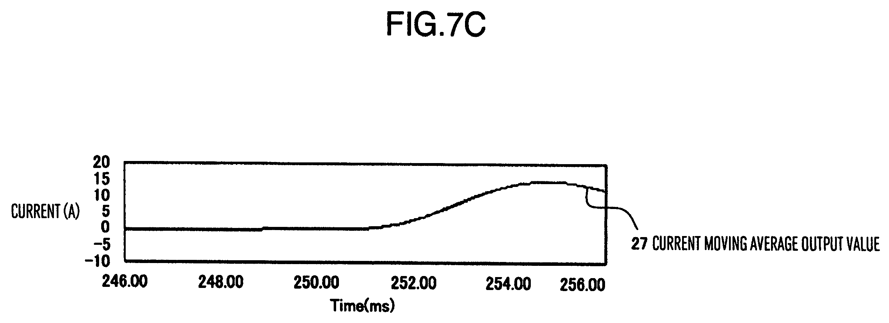

With the increase in the three-phase AC voltage (Fig. 6A), the value of the three-phase AC current waveform 21 transiently increases (Fig. 6B), the distance of the value of the DC voltage waveform 23 from the DC voltage command value 22 gradually increases (Fig. 6C). The q-axis current detection value 25 gradually increases (Fig. 7A), the voltage moving average output value 26 gradually decreases (Fig. 7B) and the current moving average output value 27 gradually increases (Fig. 7C).

It is understood from Figs. 5B, 5C and Figs. 7B, 7C that the DC voltage change value ΔEd and the current change value Δiq change in opposite directions immediately after the occurrence of the temporary change in the source voltage of the power supply.

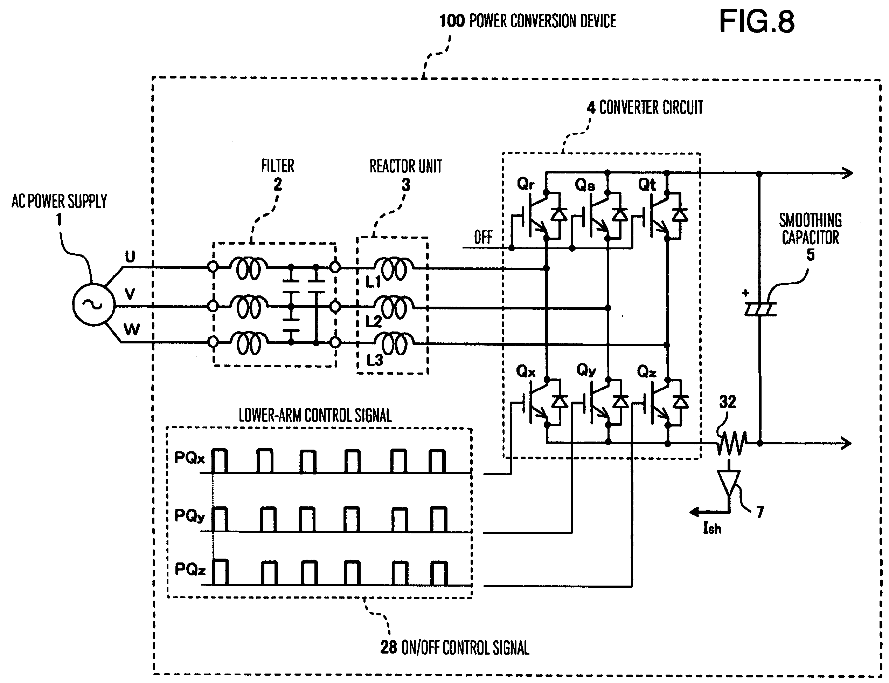

Next, with reference to Fig. 8, an explanation is given about the partial boost operation to maintain the DC voltage Ed upon determination that the source voltage of the power supply has instantaneously changed.

Upon determination that the source voltage of the power supply has changed instantaneously, the normal operation (dq vector control) of the converter is stopped, and an off control signal is applied to all the switching elements Qr, Qs, Qt of the upper arm while an on/off control signal 28 is applied to the switching elements Qx, Qy, Qz of the lower arm among the switching elements Qr, Qs, Qt, Qx, Qy, Qz making up the converter circuit 4. As a result, the converter circuit 4 performs the partial boost operation and maintains the DC voltage at a constant value. In the process, the switching elements Qr, Qs, Qt of the upper arm are set to off-state, and therefore, the voltage of the AC power supply 1 decreases, so that no excessive current flows in the switching elements even if there occurs a potential difference between input and output sides. A similar boost effect of course is obtained by replacing the controls signals of the upper and lower arms with each other.

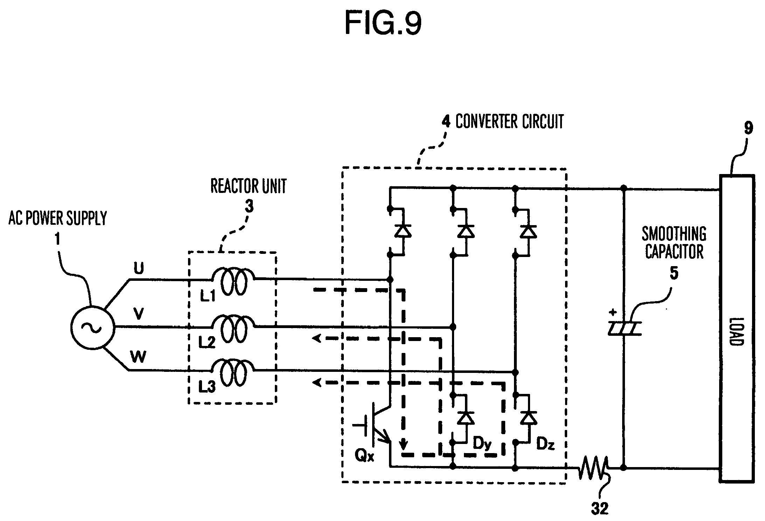

Fig. 9 is a diagram for explaining the energy accumulation in the partial boost operation mode. The switching element Qx of the lower arm indicates an equivalent circuit in on-state. Once the switching element Qx of the lower arm turns on, the phase current flows through the reactors L1, L2, L3. Specifically, the U phase current flows through the reactor L1 and the switching element Qx, and returns to the AC power supply 1 as V and W phase currents through the diodes Dy, Dz and the reactors L2, L3. In this way, the reactors L1, L2, L3 assume the state of Y-connection.

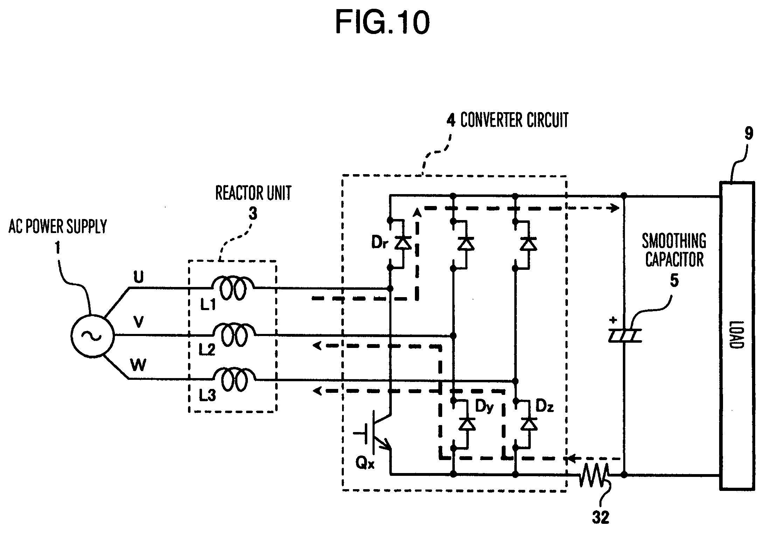

Fig. 10 is a diagram for explaining the energy discharge in the partial boost operation mode, in which the switching element Qx is turned from on to off-state. As a result, an inverse electromotive force is generated in the reactor L1 in the direction preventing the current change and the boost operation is performed. Specifically, the U phase current flowing in the reactor L1 flows to the smoothing capacitor 5 through the diode Dr of the upper arm, and through the shunt resistor 32, the diodes Dy, Dz and the reactors L2, L3, returns to the AC power supply 1 as V and W phase currents. As a result, the smoothing capacitor 5 is charged in one way, and the energy charged when turned off is equal to the magnetic energy stored in the reactor L1 when the switching element Qx is in on-state.

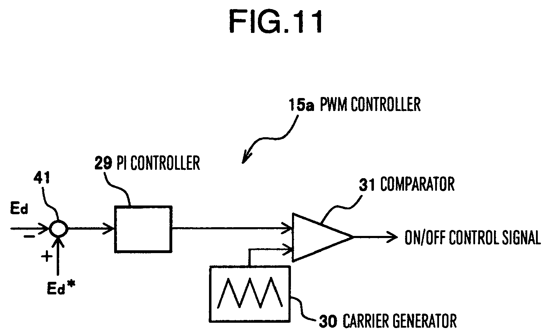

The on/off control of the charge current is made possible by regulating the on/off control signal 28, and therefore, the DC voltage Ed can be regulated. A specific regulation method is explained with reference to the block configuration of the PWM controller in the partial boost operation mode shown in Fig. 11. Specifically, the PWM controller 15a including a subtractor 41, a PI controller 29, a carrier generator 30 and a comparator 31, generates a PWM signal (on/off control signal 28) for on/off control of the switching element Qx. The subtractor 41 calculates the deviation by subtracting the DC voltage Ed from the DC voltage command value Ed*. In the PI controller 29, the deviation calculated by the subtractor 41 is subjected to the proportional plus integral operation. The carrier generator 30 generates a triangular wave linearly increased or decreased. The comparator 31 generates an on/off control signal 28 by comparing the output signal of the PI controller 29 with the output signal of the carrier generator 30. Specifically, the PWM controller 15a regulates the modulation rate of the PI controller 29 using the deviation between the DC voltage detection value Ed and the boost command value Ed*, and by comparing it with the triangular wave, regulates the pulse width.

Also during the partial boost operation, the DC voltage Ed is detected and the change value ΔEd of the DC voltage is calculated. In the case where the change value ΔEd of the DC voltage increases to a predetermined positive value or higher or decreases to a predetermined negative value or lower, it is determined to be the power restoration. Once the power restoration is detected, the converter operation mode is switched from the partial boost operation mode to the normal converter operation (PWM operation) mode. Also, in order to avoid the overcurrent at the time of restarting the converter, the phase of the control system is updated even during the partial boost operation.

In order to avoid the effect of the accumulated deviation due to the phase updating of the control system, however, the converter operation mode is switched to the normal operation mode upon lapse of a predetermined time length even in the case where it cannot be determined to be the power restoration.

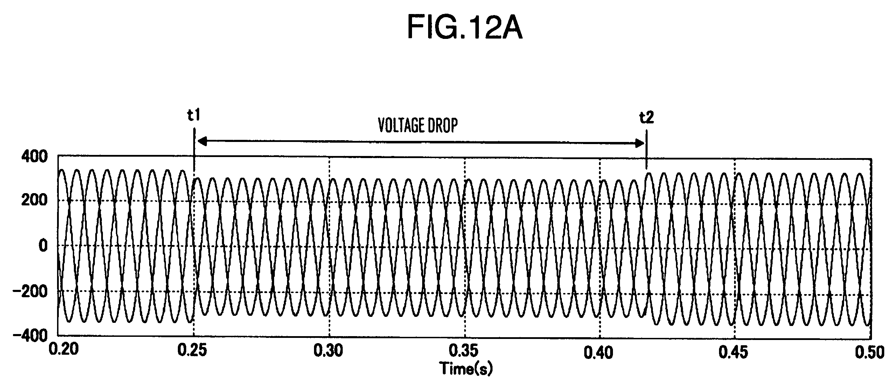

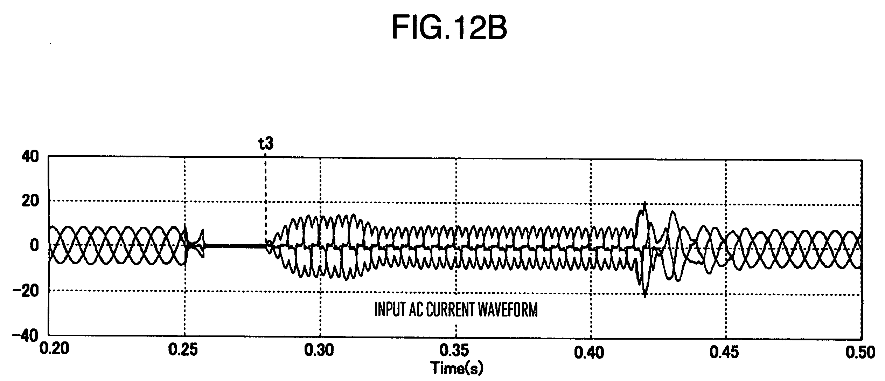

Figs. 12A to 12C show voltage-current waveforms showing the effects of the power conversion device and the result of simulation before and after the instantaneous drop of the source voltage of the power supply. The effect of suppressing the abrupt change of the input AC current and the output DC voltage can be confirmed. Fig. 12A shows the source voltage waveform of U, V and W phases, in which the source voltage of the power supply instantaneously drops at time point t1 and is restored at time point t2. Fig. 12B shows an input AC current waveform, in which the sinusoidal ripple current flows by vector control before time point t1 when the source voltage of the power supply instantaneously drops, while the switching operation is stopped and the input AC current is transiently converged to zero between time point t1 and t3. Then, during the period between time point t3 and t2 when the partial boost operation is performed, the ripple current of a distorted wave flows, while the ripple current of the sinusoidal wave again begins to flow at time point t2.

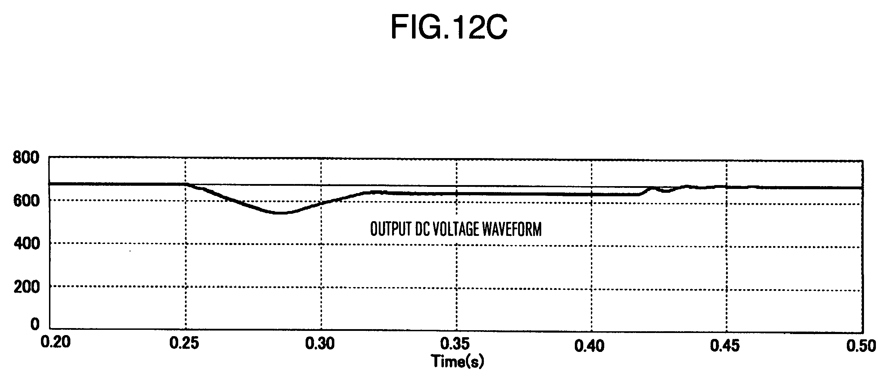

Fig. 12C shows an output DC voltage waveform, in which the voltage remains constant before time point t1 when the voltage instantaneously drops, and the DC voltage gradually decreases during the period of t1 to t3 when the switching operation is stopped. At time point t3 when the switching operation starts, the DC voltage begins to increase and approaches the target voltage. At and after time point t2, the target voltage is approached in such a manner as to obviate the deviation.

According to this embodiment, the DC bus current is detected using the shunt resistor. Actually, however, the DC bus current may alternatively be detected by a current sensor with a Hall element instead of the shunt resistor. In place of the DC bus current, the three-phase AC current may of course be detected using the current sensor.

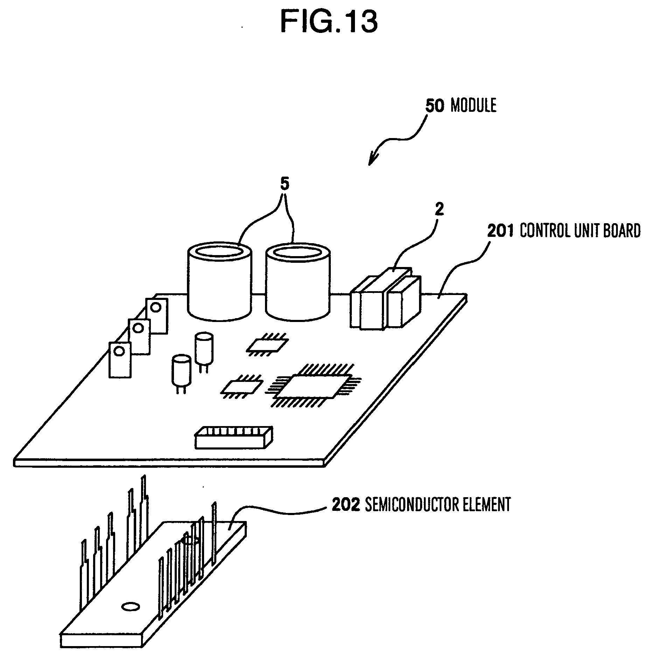

Fig. 13 shows the outer appearance of the module 50 as one form of the end product.

The module 50 is used for a power conversion device having a semiconductor element 202 mounted on a control unit board 201. The bus DC current detector 7, the DC voltage detector 8 and the converter control unit 6 shown in Fig. 1 are mounted directly and the converter circuit 4 as a one-chip semiconductor element 202 is mounted, on the control unit board 201, This modularization reduces both the device size and cost. Incidentally, a module is defined as "a standardized component unit" and configured of hardware/software parts separable from each other. From the viewpoint of manufacture, these parts are desirably but not necessarily constructed on the same circuit board. Thus, the parts may be constructed on a plurality of circuit boards built in the same housing.

According to this embodiment, the change in the input current and the output DC voltage which otherwise might occur at the time of instantaneous stop of the device can be suppressed without the AC voltage sensor on AC side of the module. Also, the surge current for power restoration is so small that the device reliability is improved.

(Second embodiment)

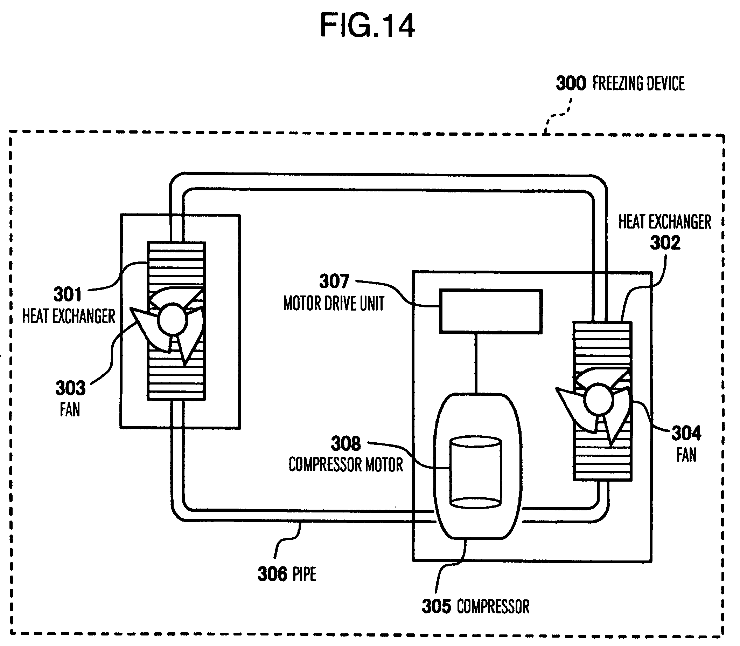

Fig. 14 is a diagram showing the configuration of a freezing device such as an air conditioner or a freezer using the aforementioned power conversion device according to the second embodiment of the invention.

The freezing device 300 is a temperature conditioning device and configured of heat exchangers 301, 302, fans 303, 304, a compressor 305, a pipe 306 and a motor drive unit 307. Incidentally, the compressor motor 308 is a synchronous motor with a permanent magnet and arranged in the compressor 305. The motor drive unit 307 converts the three-phase AC power into the DC power using the power conversion device of the first embodiment and supplies it to the inverter for controlling the motor thereby to drive the motor.

The use of the power conversion device according to the first embodiment not only realizes the protection against high harmonics but also reduces the change in the input current and the DC voltage and the effect on the inverter and the motor even if power is instantaneously stopped for a short time (several power periods). Even at the place of installation in an unfavorable power environment, therefore, the freezing device having the power conversion device according to the invention can realize a high reliability.

In spite of the embodiments described above, the present invention is not limited to them, and it is apparent to those skilled in the art that the invention can be various modified and corrected without departing from the scope of the claims appended hereto.

BRIEF DESCRIPTION OF THE DRAWINGS

Fig. 1 is a diagram showing the configuration of the power conversion device according to an embodiment of the invention.

Fig. 2 is a diagram showing the function block configuration of the control unit of the power conversion device according to an embodiment of the invention.

Fig. 3 is a diagram showing the block configuration of the phase estimator of the power conversion device according to an embodiment of the invention.

Fig. 4A is a diagram showing a voltage waveform at the time of an instantaneous stop.

Fig. 4B is a diagram showing a current waveform at the time of an instantaneous stop.

Fig. 4C is a diagram showing a DC voltage waveform at the time of an instantaneous stop.

Fig. 5A is a diagram showing another current waveform at the time of an instantaneous stop.

Fig. 5B is a diagram showing another voltage waveform at the time of an instantaneous stop.

Fig. 5C is a diagram showing another current waveform at the time of an instantaneous stop.

Fig. 6A is a diagram showing a voltage simulation waveform at the time of power restoration.

Fig. 6B is a diagram showing a current simulation waveform at the time of power restoration.

Fig. 6C is a diagram showing a voltage simulation waveform at the time of power restoration.

Fig. 7A is a diagram showing another current simulation waveform at the time of power restoration.

Fig. 7B is a diagram showing another voltage simulation waveform at the time of power restoration.

Fig. 7C is a diagram showing still another current simulation waveform at the time of power restoration.

Fig. 8 is a diagram for explaining the partial boost operation mode of the power conversion device.

Fig. 9 is a diagram for explaining the energy accumulation in the partial boost operation mode.

Fig. 10 is a diagram for explaining the energy discharge in the partial boost operation mode.

Fig. 11 is a diagram showing the block configuration of the PWM control unit in the partial boost operation mode of the power conversion device.

Fig. 12A is a diagram showing a voltage waveform indicating the effects of the power conversion device according to an embodiment of the invention.

Fig. 12B is a diagram showing a current waveform indicating the effects of the power conversion device according to an embodiment of the invention.

Fig. 12C is a diagram showing a voltage waveform indicating the effects of the power conversion device according to an embodiment of the invention.

Fig. 13 is a diagram showing the external appearance of the module of the power conversion device according to an embodiment of the invention.

Fig. 14 is a diagram showing the configuration of the freezing device according to an embodiment of the invention.

**Claims**

1. A power conversion device (100) comprising a plurality of reactors (L1, L2, L3) with each one end thereof connected to each phase of an AC power supply (1), a converter circuit (4) connected to each other end of the plurality of reactors (L1, L2, L3) to convert AC power to DC power, a smoothing capacitor (5) connected between DC terminals on an output side of the converter circuit (4), a current detection circuit (7, 32) for detecting a DC bus current as a sum of a load current and a current flowing in the smoothing capacitor (5) or an input AC current of the converter circuit (4), a voltage detection circuit (8) for detecting an output DC voltage of the converter circuit (4), and a control unit (6) for controlling the converter circuit (4) using a current value detected by the current detection circuit (7, 32) and a voltage detection value detected by the voltage detection circuit (8), **characterized in that**

   the control unit (6) subjects the converter circuit (4) to a dq vector control in a case where the voltage input to the reactors (L1, L2, L3) is constant, and

   wherein the control unit (6), upon determination that a source voltage of the power supply (1) has temporarily decreased or temporarily increased, applies an off control signal to a group of switching elements (Qr, Qs, Qt) for one of upper and lower arms and on/off control signals to a group of switching elements (Qx, Qy, Qz) for the other one of the upper and lower arms among the groups of switching elements making up the converter circuit (4),

   wherein in a case where the change amount of the current value is not more than a predetermined negative value and the change amount of the voltage detection value is not less than a predetermined positive value, the control unit (6) determines that the source voltage of the power supply (1) has decreased temporarily, while in a case where the change amount of the current value is not less than a predetermined positive value and the change amount of the voltage detection value is not more than the predetermined negative value, then the control unit (6) determines that the source voltage of the power supply (1) has increased temporarily.

2. The power conversion device (100) according to Claim 1,

   wherein the control unit (6) calculates an active current component amount as the q-axis current by a dq vector transform of the detection value of the input AC current or the AC current value reproduced from the DC bus current, and

   wherein the change in the current value is calculated by taking a moving average of the difference between the instantaneous detection value of the q-axis current and the output value obtained by processing the q-axis current through a low-pass filter.

3. The power conversion device according to Claim 1,

   wherein the control unit (6) performs the control operation in such a manner that the voltage detection value and the DC voltage command value coincide with each other, and

   wherein the change amount of the voltage detection value is calculated by taking the moving average of the differential voltage obtained by subtracting the voltage detection value from the DC voltage command value.

4. The power conversion device (100) according to Claim 1,

   wherein the control unit (6) changes the pulse width of the on/off control signals based on the voltage detection value and the voltage command value.

5. The power conversion device (100) according to Claim 1,

   wherein the control unit (6) determines whether the supply voltage of the power supply (1) is restored or not, by calculating the change in the voltage detection value during the partial boost operation, and upon detection of the restored voltage, decreases the pulse width of the on/off control signal thereby to switch to the dq vector control.

6. The power conversion device (100) according to Claim 1,

   wherein the control unit (6) switches to the dq vector control upon lapse of a predetermined length of time after determining that the source voltage of the power supply (1) has temporarily decreased or temporarily increased.

7. An air conditioner using a power conversion device (100) according to at least one of the preceding claims.

8. A freezing device (300) using a power conversion device (100) according to at least one of claims 1 to 6.

**Patentansprüche**

1. Stromwandlervorrichtung (100) mit einer Mehrzahl von Induktoren (L1, L2, L3), bei denen jeweils ein Ende mit jeweils einer Phase einer Wechselstromquelle (1) verbunden ist, mit einer Wandlerschaltung (4), die mit dem jeweils anderen Ende der Mehrzahl von Induktoren (L1, L2, L3) verbunden ist, um Wechselstrom in Gleichstrom umzuwandeln, einem Glättungskondensator (5), der zwischen Gleichstromanschlüssen auf einer Ausgangsseite der Wandlerschaltung (4) angeschlossen ist, einer Stromerfassungsschaltung (7, 32) zum Erfassen eines Bus-Gleichstroms als einer Summe aus einem Laststrom und einem Strom, der in den Glättungskondensator (5) fließt, oder einem Eingangswechselstrom der Wandlerschaltung (4), einer Spannungserfassungsschaltung (8) zum Erfassen einer Ausgangs-Gleichspannung der Wandlerschaltung (4), und einer Steuereinheit (6) zum Steuern der Wandlerschaltung (4), wobei ein Stromwert verwendet wird, der von der Stromerfassungsschaltung (7, 32) erfasst wird, und wobei ein Spannungserfassungswert verwendet wird, der von der Spannungserfassungsschaltung (8) erfasst wird, **dadurch gekennzeichnet, dass** die Steuereinheit (6) die Wandlerschaltung (4) einer dq-Vektor-Steuerung in einem Fall unterzieht, in dem die Eingangsspannung der Induktoren (L1, L2, L3) konstant ist, und wobei die Steuereinheit (6) nach der Erfassung, dass eine Quellenspannung der Stromquelle (1) zeitweise gesunken ist oder zeitweise gestiegen ist, ein Ausschaltsteuersignal an eine Gruppe von Schaltelementen (Qr, Qs, Qt) für einen von dem oberen und dem unteren Arm schickt, und An/Aus-Steuersignale an eine Gruppe von Schaltelementen (Qx, Qy, Qz) für den anderen des oberen und des unteren Arms innerhalb einer Gruppe von Schaltelementen, aus denen die Wandlerschaltung (4) besteht, wobei in einem Fall, in dem der Änderungsbetrag des Stromwertes nicht größer ist als ein vorbestimmter negativer Wert und der Änderungsbetrag des Spannungserfassungswertes nicht kleiner ist als ein vorbestimmter positiver Wert, die Steuereinheit (6) erfasst, dass die Quellenspannung der Stromquelle (1) zeitweise abgesunken ist, während in einem Fall, in dem der Änderungsbetrag des Stromwertes nicht kleiner ist als ein vorbestimmter positiver Wert und der Änderungsbetrag des Spannungserfassungswertes nicht größer ist als der vorbestimmte negative Wert, die Steuereinheit (6) erfasst, dass die Quellenspannung der Stromquelle (1) zeitweise gesunken ist.

2. Stromwandlervorrichtung (100) nach Anspruch 1,
wobei die Steuereinheit (6) einen Wert einer aktiven Stromkomponente als den q-Achsen-Strom berechnet durch eine dq-Vektor-Transformation des Erfassungswertes des Eingangswechselstroms oder des Wechselstromwertes, der von dem Bus-Gleichstrom reproduziert wird, und wobei die Änderung des Stromwertes berechnet wird unter Verwendung eines gleitenden Durchschnittswerts zwischen dem augenblicklichen Erfassungswert des Q-Achsen-Stroms und dem Ausgangswert, der erhalten wird durch Verarbeiten des Q-Achsenstrom durch einen Tiefpassfilter.

3. Stromwandlervorrichtung nach Anspruch 1,
wobei die Steuereinheit (6) den Steuervorgang derart ausführt, dass der Spannungserfassungswert und der Gleichspannungssteuerwert zusammenfallen, und wobei der Änderungsbetrag des Spannungserfassungswertes berechnet wird durch Verwendung des gleitenden Durchschnitts der Differenzspannung, der erhalten wird durch Subtraktion des Spannungserfassungswertes von dem Gleichspannungssteuerwert.

4. Stromwandlervorrichtung (100) nach Anspruch 1,
wobei die Steuereinheit (6) die Pulsweite des An/Aus-Steuersignals auf der Grundlage des Spannungserfassungswertes und des Spannungssteuerwertes ändert.

5. Stromwandlervorrichtung (100) nach Anspruch 1,
wobei die Steuereinheit (6) bestimmt, ob die Speisespannung der Stromquelle (1) wiederhergestellt ist oder nicht durch Berechnung der Änderung des Spannungserfassungswertes während des teilweisen Verstärkungsbetriebs und nach der Erfassung der wiederhergestellten Spannung, und wobei die Steuereinheit (6) die Pulsweite des An/Aus-Steuersignals verkleinert, um dadurch zu der dq-Vektor-Steuerung umzuschalten.

6. Stromwandlervorrichtung (100) nach Anspruch 1,
wobei die Steuereinheit (6) nach dem Ablauf einer vorbestimmten Zeitspanne auf die dq-Vektor-Steuerung umschaltet nach Erfassung, dass die Quellenspannung der Stromquelle (1) zeitweise gesunken oder zeitweise gestiegen ist.

**7.** Klimaanlage, die eine Stromwandlervorrichtung (100) nach mindestens einem der vorstehenden Ansprüche verwendet.

**8.** Gefriervorrichtung (300), die eine Stromwandlervorrichtung (100) nach mindestens einem der Ansprüche 1 bis 6 verwendet.


**Revendications**

**1.** Dispositif de conversion de puissance (100) comprenant une pluralité de réacteurs (L1, L2, L3) avec chaque première extrémité de ceux-ci connectée à chaque phase d'une alimentation électrique (1) CA, un circuit convertisseur (4) connecté à chaque autre extrémité de la pluralité de réacteurs (L1, L2, L3) pour convertir une puissance CA en une puissance CC, un condensateur de lissage (5) connecté entre des bornes CC sur un côté de sortie du circuit convertisseur (4), un circuit (7, 32) de détection de courant pour détecter un courant de bus CC comme une somme d'un courant de charge et d'un courant traversant le condensateur de lissage (5) ou un courant CA d'entrée du circuit convertisseur (4), un circuit (8) de détection de tension pour détecter une tension CC de sortie du circuit convertisseur (4), et une unité (6) de commande pour commander le circuit convertisseur (4) en utilisant une valeur de courant détectée par le circuit (7, 32) de détection de courant et une valeur de détection de tension détectée par le circuit (8) de détection de tension, **caractérisé en ce que**

l'unité (6) de commande soumet le circuit convertisseur (4) à une commande de vecteur dq dans le cas où la tension entrée dans les réacteurs (L1, L2, L3) est constante, et

dans lequel l'unité (6) de commande, à la détermination qu'une tension de source de l'alimentation électrique (1) a temporairement baissé ou temporairement augmenté, applique un signal de commande d'arrêt à un groupe d'éléments de commutation (Qr, Qs, Qt) pour un des bras supérieur et inférieur et des signaux de commande marche/arrêt à un groupe d'éléments de commutation (Qx, Qy, Qz) pour l'autre des bras supérieur et inférieur parmi les groupes d'éléments de commutation constituant le circuit convertisseur (4),

dans lequel, dans le cas où la quantité de changement de la valeur de courant n'est pas supérieure à une valeur négative prédéterminée et la quantité de changement de la valeur de détection de tension n'est pas inférieure à une valeur positive prédéterminée, l'unité (6) de commande détermine que la tension de source de l'alimentation électrique (1) a baissé temporairement, tandis que dans le cas où la quantité de changement de la valeur de courant n'est pas inférieure à une valeur positive prédéterminée et la quantité de changement de la valeur de détection de tension n'est pas supérieure à la valeur négative prédéterminée, alors l'unité (6) de commande détermine que la tension de source de l'alimentation électrique (1) a augmenté temporairement.

**2.** Dispositif de conversion de puissance (100) selon la revendication 1,

dans lequel l'unité (6) de commande calcule une quantité de composante de courant active comme le courant d'axe q par une transformée de vecteur dq de la valeur de détection du courant CA d'entrée ou la valeur de courant CA reproduite à partir du courant de bus CC, et

dans lequel le changement de la valeur de courant est calculé en prenant une moyenne mobile de la différence entre la valeur de détection instantanée du courant d'axe q et la valeur de sortie obtenue en traitant le courant d'axe q par un filtre passe-bas.

**3.** Dispositif de conversion de puissance (100) selon la revendication 1,

dans lequel l'unité (6) de commande exécute l'opération de commande de telle manière que la valeur de détection de tension et la valeur de commande de tension CC coïncident l'une avec l'autre, et

dans lequel la quantité de changement de la valeur de détection de tension est calculée en prenant la moyenne mobile de la tension différentielle obtenue en soustrayant la valeur de détection de tension de la valeur de commande de tension CC.

**4.** Dispositif de conversion de puissance (100) selon la revendication 1,

dans lequel l'unité (6) de commande change la largeur d'impulsion des signaux de commande marche/arrêt sur la base de la valeur de détection de tension et de la valeur de commande de tension.

**5.** Dispositif de conversion de puissance (100) selon la revendication 1,

dans lequel l'unité (6) de commande détermine si la tension d'alimentation de l'alimentation électrique (1) est ou non restaurée, en calculant le changement de la valeur de détection de tension pendant l'opération d'augmentation partielle, et, à la détection de la tension restaurée, diminue la largeur d'impulsion du signal de commande marche/arrêt pour ainsi commuter sur la commande de vecteur dq.

**6.** Dispositif de conversion de puissance (100) selon la revendication 1,
dans lequel l'unité (6) de commande commute sur la commande de vecteur dq à la fin d'une longueur de temps prédéterminée après la détermination que la tension de source de l'alimentation électrique (1) a temporairement diminué ou temporairement augmenté.

**7.** Climatiseur utilisant un dispositif de conversion de puissance (100) selon au moins une des revendications précédentes.

**8.** Dispositif de congélation (300) utilisant un dispositif de conversion de puissance (100) selon au moins l'une des revendications 1 à 6.

# FIG.1

# FIG.2

EP 2 234 261 B1

# FIG.3

12 PHASE ESTIMATOR

# FIG.4A

VOLTAGE DROP

EP 2 234 261 B1

**20** THREE-PHASE AC VOLTAGE WAVEFORM

# FIG.4B

21 THREE-PHASE AC CURRENT WAVEFORM

EP 2 234 261 B1

# FIG.4C

22 DC VOLTAGE COMMAND

23 DC VOLTAGE WAVEFORM

VOLTAGE (V)

700
680
660
640
620
600

246.00    248.00    250.00    252.00    254.00    256.00

Time(ms)

EP 2 234 261 B1

# FIG.5A

EP 2 234 261 B1

VOLTAGE DROP

**24** q-AXIS CURRENT LOW-PASS FILTER OUTPUT VALUE

**25** q-AXIS CURRENT DETECTION VALUE

CURRENT (A)

Time(ms)

EP 2 234 261 B1

# FIG.5B

26 VOLTAGE MOVING AVERAGE OUTPUT VALUE

# FIG.5C

CURRENT (A)

10
5
0
−5
−10

246.00   248.00   250.00   252.00   254.00   256.00

Time(ms)

27 CURRENT MOVING AVERAGE OUTPUT VALUE

EP 2 234 261 B1

# FIG.6A

VOLTAGE INCREASE →

20 THREE-PHASE AC VOLTAGE WAVEFORM

VOLTAGE (V)

400
200
0
-200
-400

246.00    248.00    250.00    252.00    254.00    256.00

Time(ms)

EP 2 234 261 B1

# FIG.6B

CURRENT (A)

40
20
0
-20
-40

246.00    248.00    250.00    252.00    254.00    256.00

Time(ms)

21  THREE-PHASE AC CURRENT WAVEFORM

# FIG.6C

23 DC VOLTAGE WAVEFORM

22 DC VOLTAGE COMMAND

VOLTAGE (V)

800
750
700
650
600

246.00   248.00   250.00   252.00   254.00   256.00

Time(ms)

# FIG.7A

VOLTAGE INCREASE →

**25** q-AXIS CURRENT DETECTION VALUE

**24** q-AXIS CURRENT LOW-PASS FILTER OUTPUT VALUE

CURRENT (A)

30
20
10
0
-10

246.00    248.00    250.00    252.00    254.00    256.00

Time(ms)

# FIG.7B

VOLTAGE (V)

20
0
−20
−40
−60

246.00   248.00   250.00   252.00   254.00   256.00

Time(ms)

26  VOLTAGE MOVING AVERAGE OUTPUT VALUE

EP 2 234 261 B1

FIG.7C

**27 CURRENT MOVING AVERAGE OUTPUT VALUE**

EP 2 234 261 B1

FIG.8

100 POWER CONVERSION DEVICE

4 CONVERTER CIRCUIT

AC POWER SUPPLY
1

FILTER
2

REACTOR UNIT
3

SMOOTHING CAPACITOR
5

OFF

Qr    Qs    Qt

Qx    Qy    Qz

L1

L2

L3

LOWER-ARM CONTROL SIGNAL

PQx

PQy

PQz

28 ON/OFF CONTROL SIGNAL

$I_{sh}$

32

7

EP 2 234 261 B1

# FIG.9

EP 2 234 261 B1

# FIG.10

**4 CONVERTER CIRCUIT**

**9**

REACTOR UNIT
**3**

AC POWER SUPPLY

**1**

SMOOTHING
CAPACITOR
**5**

LOAD

U

V

W

L1

L2

L3

Dr

Dy   Dz

Qx

**32**

# FIG.11

EP 2 234 261 B1

## FIG.12A

# FIG.12B

INPUT AC CURRENT WAVEFORM

# FIG.12C

OUTPUT DC VOLTAGE WAVEFORM

Time(s)

EP 2 234 261 B1

# FIG.13

**50** MODULE

**5**

**2**

**201** CONTROL UNIT BOARD

**202** SEMICONDUCTOR ELEMENT

FIG.14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060044848 A1
- JP 3743950 B
- JP 2007068332 A